# EUROPEAN PATENT SPECIFICATION

(11) **EP 2 759 931 B1**
(45) Date of publication and mention of the grant of the patent: **27.10.2021**
(21) Application number: 14150416.7
(22) Date of filing: 08.01.2014
(51) Int. Cl.: G06F 9/445, G06F 8/61

(54) **Downloading and launching an APP on a second device from a first device**
Herunterladen und Starten einer App auf einer zweiten Vorrichtung von einer ersten Vorrichtung
Téléchargement et lancement d'une application sur un second dispositif à partir d'un premier dispositif

(30) Priority: 28.01.2013 US 201313751821; 31.12.2013 KR 20130168267
(43) Date of publication of application: 30.07.2014
(60) Divisional application: 20184977.5
(73) Proprietor: Samsung Electronics Co., Ltd., Gyeonggi-do 16677 (KR)
(72) Inventor: Gava, Fabio, California, CA California CA 92694 (US); Shelansky, Andrew, California, CA California CA 92614 (US); Xie, Fei, California, CA California CA 92601 (US); Viswanathan, Murugan, Irvington, TX Texas TX 75038 (US); Lee, Shiangfeng, California, CA California CA 92603 (US); Yang, Nan, California, CA California CA 92660 (US)
(74) Representative: Appleyard Lees IP LLP

(56) References cited:
- US-A1- 2012 054 735
- Wikipedia: "Secure Shell - SSH", en.wikipedia.org, 26 January 2013 (2013-01-26), pages 1-10, XP055106241, Retrieved from the Internet: URL:http://en.wikipedia.org/w/index.php?ti tle=Secure_Shell&oldid=534946081 [retrieved on 2014-03-07]

## Description

### TECHNICAL FIELD

An embodiment of the present invention relates generally to software for computing devices and convergence networking of such devices. More specifically, it relates to enabling downloading and executing of software applications on various user devices in the same network.

### BACKGROUND

Applications that run on non-traditional computing devices, commonly referred to as "apps," are now quite widespread and known to many users mostly due to their increasingly prevalent use of smartphones, tablets, and other mobile devices. Apps are presently available on a wide range of platforms, including TVs and PCs. Smartphone users frequently download, install and use apps onto their devices. This practice is becoming increasingly popular as well with tablets. Apps are one of the drivers making these mobile devices more and more popular. Finding an app in an app marketplace or app store and then downloading it onto a mobile device is a straightforward procedure and has now become second-hand nature for a lot of users, particularly younger ones.

However, downloading an app onto a TV has not yet caught on among the general public. People do not generally think of executing an app on their TV, even if they have an app on their smartphone and a companion or compatible app is available. Users simply are not aware that there is a similar app available for download on their TV. Or, the user has already downloaded a similar or companion app on their TV but is unaware that the two apps (e.g., on the phone and TV) executing together can provide an enhanced user experience. In instances where a user thinks about executing an app on a TV, she does it by using a remote control and downloads and executes it directly on the TV.

Convergence among various devices is becoming more popular, especially among devices on a home network that has a TV. Convergence features provide the capability of devices to communicate and, consequently, new mechanisms for deploying apps on other devices within a convergence network would be desirable. There is an increasing desire to have devices on a local network communicate with each other and share information. For example, with apps, there is often a companion app that executes on a compatible device having an entirely different platform. To illustrate, there may be a Hulu app for the TV and for a smartphone, but the user only has the one on her smartphone. However, her experience with Hulu would be better if she could execute the Hulu app for the TV as well. As such, it would be desirable to have two or more companion apps work together with minimal user input to deliver an enhanced user experience for the apps.
Patent application publication US2012054735A1 discloses an electronic mobile communication device is configured to install a computer program onto a computing device that is different than the mobile communication device. The installation process includes the electronic mobile computing device communicating with the computing device to obtain information for use in installing the computer program, and the electronic mobile computing device executing an installer for the computer program. The installer uses the information to install the computer program on the computing device.

### SUMMARY

According to the present invention there is provided a method as set forth in the appended claims. Other features of the invention will be apparent from the dependent claims, and the description which follows.

The invention provides a method of using a device to execute an app on another (second) device which is a TV, for example, using a smartphone having a particular app to execute a companion app on a TV. The first app and the second app execute together to produce a convergent multiscreen user experience with the apps. The second device is queried by the first device to determine whether there is a compatible or companion app already installed on the second device. If there is, it is then determined whether the companion app is presently running on the second device. If it is not, then a message is displayed on the first device asking whether the user of the first device wants to execute the companion app on the second device. If the user of the first device consents, the companion app is executed on the second device. In one embodiment, there may be a message displayed on the second device stating that another user is causing the execution of an app on the second device. For example, a person watching TV will see a message that another user, via her smartphone, is causing the execution of a companion app on the TV. The program or show that the person is watching on TV will not be interrupted.

Another aspect of the invention is a method of using a first device to execute an app on a second device (TV). The first device queries the second device for a compatible app to see if it is already installed. The user of the first device is prompted as to whether to install the compatible app on the second device. It is then determined whether to install the compatible app on the second device. A request is transmitted to the second device to install the compatible app. The compatible app is then downloaded onto the second device. The first app and the second app execute together to produce a convergent multiscreen user experience with the apps.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is an illustration of a series of displays on two devices connected in a local/home network in accordance with one embodiment;
FIGS. 2A and 2B are flow diagrams of processes for discovering, executing, and downloading a companion app on a second device in accordance with one embodiment of the present invention;
FIG. 3 is a block diagram showing relevant components and modules in a first device in accordance with one embodiment of the present invention.

In the drawings, like reference numerals are sometimes used to designate like structural elements. It should also be appreciated that the depictions in the figures are diagrammatic and not to scale.

### DETAILED DESCRIPTION

Applications are currently available on a wide range of platforms and devices, including smartphones, tablet devices, mobile gaming devices, computing devices in cars, PCs, and TVs. Users are accustomed to the app download, installation, and usage experience on their handheld and mobile devices, the vast majority of which are smartphones and tablets. Now that convergence features enable communication between all these devices and platforms on a local/home network, new mechanisms described in the various embodiments of the present invention deploy apps among various devices in the convergence network. One example of convergence is allowing the user to launch an app on a TV using a smartphone. The overall goal is that when devices are on the same network, it would be desirable to have synergy among the devices.

Methods and systems for enhancing the user experience of application downloading and usage between multiple devices in a network are described in the various figures. One or more embodiments describe the ability of one instance of an app on a first device to identify and verify installation and/or execution of a companion app on a second compatible device where the two devices may have entirely different platforms (e.g., smartphone operating system and TV platform). The term platform may refer to the application runtime environment provided by the TV. It may be described as a layer above the TV operating system that provides both a runtime environment for generic programming instructions as well as the APIs to interface with specific TV functions, services or devices. In the TV application platform, programmers have a choice of programming, for example, in JavaScript or Flash. There are also APIs to interface with the TV tuner, infra-red remote, WiFi/Ethernet/Bluetooth adapters, cameras, and the like.

The present invention delivers more than a mere "split screen" user experience or simple sharing of an app on the devices where one app is executing on a smartphone and another related app is executing on a TV. The invention describes ways in which the experience for users having their devices on the same network converge in order to improve the user experience with respect to a particular app. In this manner, it delivers an enhanced and efficient means of providing an n-screen experience with the app; ways that provide synergy between devices on the same network.

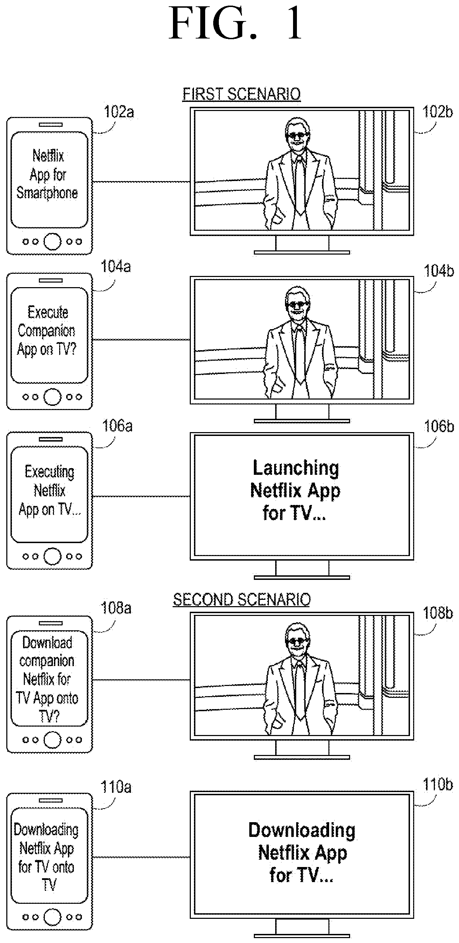

FIG. 1 is an illustration of a series of displays on two devices connected in a local/home network in accordance with one embodiment. The two devices are a smartphone and a TV. In a first scenario, a smartphone display 102a shows a Netflix app which the user is browsing. The device is connected to a home network and is in communication with a TV displaying a TV show 102b. The smartphone discovers that the TV has a companion Netflix app and asks the user if he wants to execute the Netflix companion app on the TV in display 104a. During this time the TV still displays the TV show 104b. If the smartphone user gives permission to execute the companion Netflix TV app on the TV, in one embodiment a message as shown in 106b is displayed on the TV ("Launching Netflix App for TV..." or something similar). Additional information such as the name of the user who gave permission to launch the app may be displayed or the message may be displayed in a side bar or smaller display area while the TV show continues to be displayed.

In a second scenario, the companion app may not be on the TV but one is available from an app download server or other source on the network. In this case, a display such as one shown in 108a where the user is asked whether he wants to initiate a download of a companion "Netflix for TV" app onto the TV. During this time, the TV continues to display a TV show or other image as shown in 108b. If the user gives permission to download the companion app, a display such as 110a on the smartphone indicating that the Netflix for TV app is being downloaded is shown. The TV may display a message such as shown in 110b ("Downloading Netflix App for TV...") or a similar message. At download completion the companion app will execute automatically. In an alternative embodiment the TV could prompt the user again for confirmation. As these display images show, most of the processes take place in the background, beginning with discovery of the second device to the launching or downloading of the companion app. The only interaction with the user is seeking permission to perform the launching or downloading activity. In another embodiment, these activities may be done automatically without confirmation from the user. This may be preferable for users who always want to have companion apps downloaded or executed on one or more additional devices on the network. In this scenario, the user will automatically have a convergence experience (multi-screen experience) with the app on his devices.

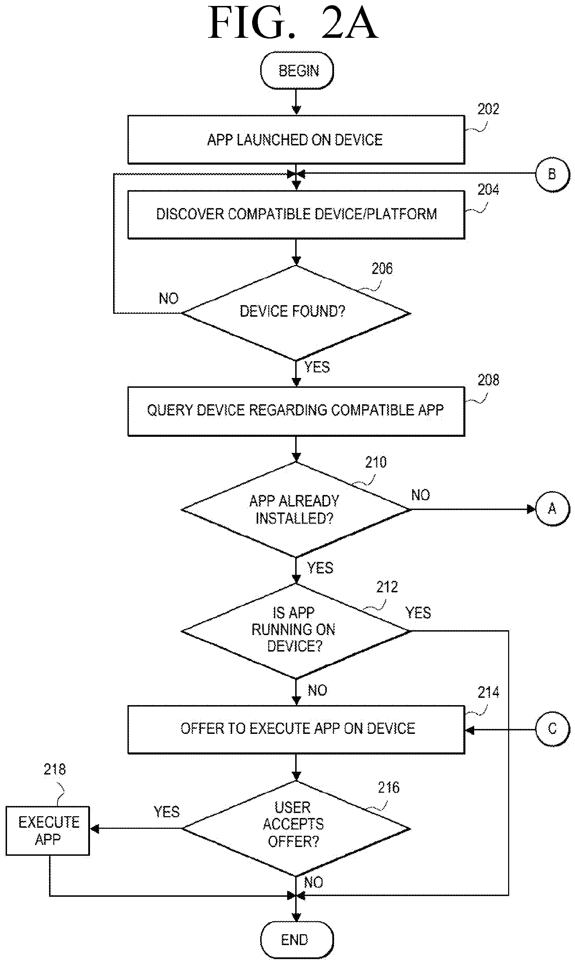

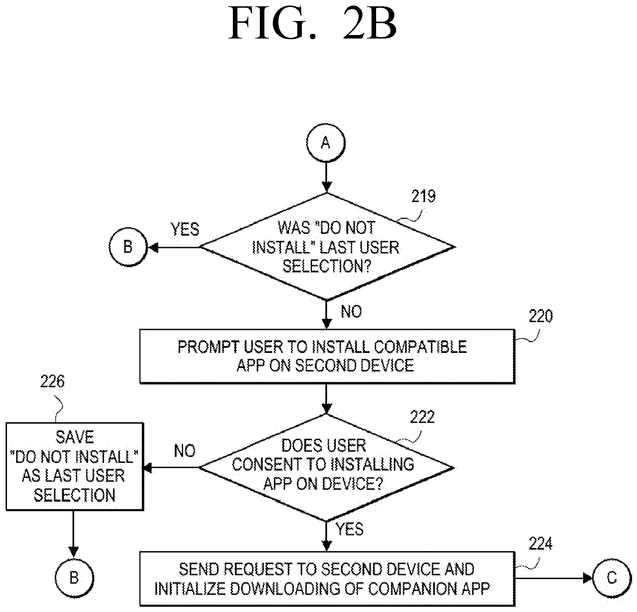

FIGS. 2A and 2B are flow diagrams of processes for discovering, executing, and downloading a companion app on a second device in accordance with one embodiment of the present invention. At block 202, a user launches an app on a device which has a particular platform and is using the app when the process starts. For ease of explanation, this app is sometimes referred to as the "primary app" (and sometimes referred to as the "first instance" of the app) and the device is referred to as the "first device." The device, which may be any device capable of executing an application, is connected to a home/local network.

At block 204, the first device discovers a compatible device/platform on the network. This discovery may be done using conventional and suitable protocols such as UPnP, Bon Jour, and the like. A device or platform is compatible if it can execute a companion app to the primary app. At block 206, it is determined whether such a device has been discovered on the network.

If such a device (the "second device"), a TV, is found on the network, control goes to block 208 where the first device queries the second device whether the second device presently has a companion or compatible app (with respect to the primary app on the first device). The second device has a software stack that can handle this type of query or request. The query is sent using a communication protocol as defined or chosen by the developer. It may be a proprietary communication protocol. If no compatible device is found on the network, the discovery process continues in the background and control goes back to block 204.

At block 210, the first device is informed of whether a companion app is already installed on the second device. If a companion app is already on the second device, control goes to block 212. If the companion app is not installed, control goes to block 220 of FIG. 2B. If the app is installed, at block 212 it is determined whether the companion app is presently running on the second device (TV). If it is, the user is already having an enhanced 2-screen, convergence experience with the app and the process ends. If it is not, at block 214, the primary app displays a message on the first device asking the user if he wants to execute the companion app on the second device, such a display is shown in display 104a of FIG. 1. The code or logic to display this message may be embedded in the primary app presently executing on the first device.

At block 216, the first device determines whether the user accepts the offer (i.e., gives permission to execute the companion app on the second device (TV)). If the user does not, the process ends. If the user accepts the offer, a message is sent to the second device and the companion app executes at which stage the process ends. Returning to the path where the companion app is already installed on the second device, the user can begin experiencing app and device convergence on two devices.

Going back to block 210, if the companion app is not installed on the second device (TV), control goes to block 220 in FIG. 2B. At this step the user is prompted as to whether he wants to install a compatible or companion app on the second device, as shown in screen display 108a of FIG. 1. Part of the process here may also involve checking whether the companion app is available for downloading from a server on the network or from an online source for apps, commonly known as an application store. At block 219, the device checks whether the last user selection for the app was to not install (e.g., "Do Not Install"). If so, control goes back to discovery at block 204. If it was not the last selection by the user, control goes to block 220. Here, assuming the app is available, the user of the first device is prompted about installing it as shown in block 220. At block 222, it is determined whether the user consents to installing the companion app on the second device. If the user does consent or give permission to have the companion app downloaded onto the second device, control goes to block 224 where a request is created and transmitted to the second device using the communication means described above. The request instructs the second device to initialize downloading of the companion app. At this stage the companion app is downloaded onto the second device as shown in displays 110a and 110b. In this manner, a device in the local network, such as a TV, downloads a specific app according to instructions sent from another device in the network. In one embodiment, control then goes to block 214 of FIG. 2A. Here the user is asked whether to execute the downloaded app.

At block 222, if the user does not consent to downloading the app, control goes to block 226 where a "do not install" setting is saved as the last user selection. This setting may be checked prior to block 220 where the user is prompted to install the companion app. If this setting indicates that the user previously selected the "do not install" option, he is not prompted again on the same question. The process then loops back to block 204 where the discovery process continues. For example, although the user may not want to install the app on the TV, a tablet may now be discoverable on the network and the same process executing in the background on the primary device will occur for this or any new devices. In this case, the user may want to install the companion app on the tablet.

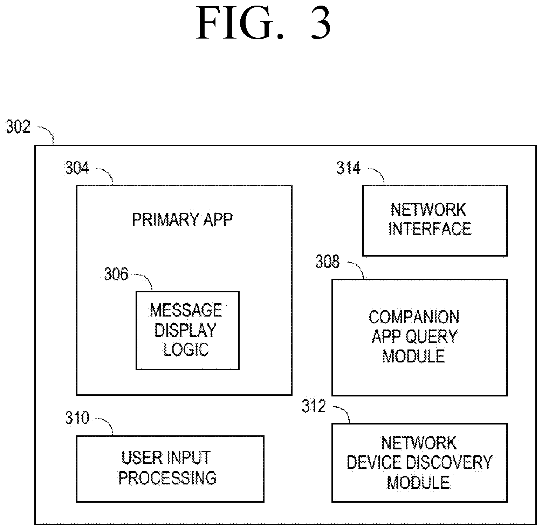

FIG. 3 is a block diagram showing relevant components and modules in a first device, such as a smartphone, in accordance with one embodiment of the present invention. A first device 302 has a primary app 304 as described above. In one or more embodiments, primary app 304 may contain logic for displaying messages on the first device, such as "Execute Companion App on TV?" or "Executing Netflix App on TV..." and the like. The user may provide input to queries by primary app 304 or other modules in device 302. These inputs may be processed by user input processing module 310. As described above, queries are also made of the second device, such as a TV, for example, to determine whether a companion app exists on the second device, if it does, whether it is executing, and so on. This may be done by logic in a companion app query module 308. First device 302 starts the process of finding a second device and companion app by initiating a discovery process on a local network using a suitable protocol such as UPnP or Bon Jour. This may be performed by network device discovery module 312 or other conventional modules for implementing such protocols. There may also be a network interface component 314 for communicating on the local network.

Through the processes described above, an application running on one class of devices (e.g., smartphone, tablet, or devices having the same operating system or platform) has awareness of a companion application for a second class of device (TV). A device from the first class realizes or becomes aware of the presence of a device from the second class on the same local network and the first device coordinates the download and installation of the companion app enabling communication of the two apps and providing a convergence experience for the user. Described below are variations of the above embodiments and alternative embodiments. Some of the description may repeat certain aspects of the content in FIGS. 1, 2A, and 2B but is provided to support the various illustrations.

In one embodiment, the ability of one instance of an application on a first device to verify an installation of a companion or second instance of the application on a second device (TV) is described. Also described is the ability of the first instance on the first device to initiate a download of the companion application on a second device. For example, in one example the process may begin with a first device, such as a tablet, running a first instance of an app. The first device is connected to a local/home network and, in the background, discovers that there is a compatible or suitable second device on the network, which is a TV, and communicates with the second device to exchange data or commands, such as commands relating to a discovery protocol (e.g., UPnP) which allows the first device to discover the second device (TV) and find its capabilities, including what apps are installed. The first device then sends a request to the second device to determine whether the second device has a companion or second instance of the (first instance) app running on the first device.

The second device (TV) sends a response to the request to the first device, i.e., whether the second device as the companion app installed or whether the server has it available for download. If the second device does not have the companion app and the server has it available for download, the first instance of the app on the first device displays a message or notification to the user. The notification indicates that a companion app is available for the second device and, in the same notification, asks whether the user wants to have the companion app downloaded to the second device from the server or other source.

If the user gives permission or approval to download the companion app, the first device issues a command to the second device (TV) to download the companion app from the server. The second device then initiates a download of the companion app after which the second device has the companion app. The first instance of the app initiates the download of a companion instance of the app onto a separate device where all the processes, except seeking permission from the user, execute in the background. The user does not need to explicitly connect to and browse an app store or app market. The mechanism for executing the processes described above can be embedded in any app in order to promote use of a companion app for a second device.

In this manner, app vendors encourage users to install companion apps onto more devices, for which consumers may not have been aware that apps were available. This is most often the case with apps for TVs. As a result of the embodiments described herein, the second device(TV), is likely used more often as an app device. The user is more aware and is more inclined to use convergence apps and have a better user experience with the apps.

To illustrate an embodiment, one device is a smartphone and the other device is a TV. The smartphone is the device being used by a user and has a primary app (also referred to as a client app) that is executing on the smartphone and the TV, in this illustration, already has an app that is a companion app to the primary app on the smartphone. It should be noted that the same relationship can be seen in the other direction, that is, the user is watching TV or the user is using (running) an app on the TV and the TV has the primary app and the smartphone already has a companion app to the primary app on the TV.

Returning to the illustration, the smartphone is running the primary app, and is on the same network as the TV. It discovers that there is a compatible TV in the same network. Here compatible implies it is on the same network and is able to execute apps. The smartphone then "pairs" with the TV. If there are other compatible devices, such as other smartphones or PCs, the smartphone carries out the same process with the other devices. The smartphone then checks via the network whether the TV has a companion app to the app executing on the smartphone. If the TV has a companion app, this fact is transmitted to the smartphone, again via the local network. The primary app on the smartphone then displays a message to the user telling the user that there is a companion app on the TV and asks whether the user wants to launch the companion app. If the user gives approval, the smartphone issues a command to the TV via network protocol (which may be proprietary) to launch the companion app on the TV. The TV launches the companion app. The primary app on the smartphone then communicates with the companion app to provide an enhanced, multi-screen user experience with respect to the app.

As described above, an embodiment of the invention introduces a new mechanism for an app on a first device to discover and launch a companion app on a second device (TV). This may be described as a peer-to-peer communication over a home/local network as described in FIGS. 2A and 2B. It is different from conventional home networking standards because an embodiment of the invention provides a mechanism for proprietary communication between the app on the first device and the companion app on the second device over standard HTTP/HTTPS, UPnP, or other conventional protocols. This mechanism, shown in blocks 204 to 224, is a direct communication mechanism between two devices over the home network, typically a wireless access point, router, or at least a network switch may be involved. Alternatively, the first and second devices could communicate over Bluetooth or Wi-Fi Direct standards which do not require any network infrastructure device. These standard technologies are used to discover and connect to other devices in the home/local network. As a result, embodiments of the present invention can support any device type and are not tied to a specific operating system, platform, or product. The developer can define their own proprietary communication protocol over this standard channel (e.g., using customized JSON, XML messages, and the like).

The invention introduces a way to identify a second device (TV) on the network and have a first device automatically ask the second device whether it has a companion app. The only interaction or communication with the user of the first device that may be needed is a message asking whether the user wants to download or execute a companion app on the second device in order to have a multi-screen app experience. In other embodiments, this is not needed.

The various embodiments enable a primary app on a first device to identify and discover a second device in the network and a compatible/companion app. This identifying and discovering is done in the background while the first device is on and connected to the network. The user of the first device is given the option of downloading and/or launching the companion app on the second device (TV). In this manner, the user enjoys a rich, immersive app experience on multiple devices.

Although a few preferred embodiments have been shown and described, it will be appreciated by those skilled in the art that various changes and modifications might be made without departing from the scope of the invention, as defined in the appended claims.

In summary, the user experience of application downloading and usage between multiple devices in a network is enhanced by the invention. One instance of an app on a first device is able to identify and verify installation and/or execution of a companion app on a second device which is a TV where the two devices may have entirely different platforms (e.g., smartphone operating system and TV platform). The experience for users who have devices on the same network converges in order to improve the user experience with respect to a particular app. In this manner, an enhanced and efficient means of providing an n-screen experience with the app is enabled; ways that provide synergy between devices on the same network.

## Claims

1. A method of using a first device having a first app thereon arranged to execute on a first operating system of the first device, to execute a second app arranged to execute on a second operating system of a second device, wherein the second device is a TV, wherein the first and second devices are both interconnected through peer-to-peer communication, and wherein the second app is a related companion application which is executable by the first app, the method comprising:
upon execution of the first app (202) by the first device:
using a networking protocol suitable for peer-to-peer communication to discover a compatible second device on the network,
communicating with the second device to exchange data relating to discovery protocol, querying the second device (208), and
determining (210), in response to the first device receiving information from the second device through the peer-to-peer communication, whether the second app is already installed on the second device; and
by the first device in response to determining that the second app is already installed on the second device, causing the second app to execute (218) on the second device by sending an execution message to the second device, or to display (214) an execution query message on the first device for receiving a user input regarding whether to execute the second app on the second device, unless the second app is already executing on the second device,
wherein the first app and the second app are arranged to operate in communication with each other, and
wherein the first app and the second app execute together to produce a convergent multiscreen user experience with the apps.

2. A method as recited in claim 1 further comprising:
providing a mechanism for communication between the first app on the first device and the second app on the second device over HTTPS.

3. A method as recited in claim 1 or claim 2, further comprising, if the second app is not installed on the second device:
the first app downloading and installing (224) the second app onto the second device from a remote server via the local network.

4. A method as recited in claim 3 further comprising:
the first app determining (219) whether a "do not install" selection has been set in relation to the second app for the second device; and if so,
disabling prompting the user of the first device to obtain user consent to install the second app.

5. A method as recited in claim 4, further comprising causing display of a notification (110b) on the second device that the second app will execute or that downloading is in progress.

6. A method as recited in claim 1 to 5, wherein the second device continues to display programming whilst downloading, installing or executing the second app.

## Patentansprüche

1. Verfahren zum Verwenden eines ersten Geräts mit einer ersten App darauf, die dazu eingerichtet ist, auf einem ersten Betriebssystem des ersten Geräts ausgeführt zu werden, um eine zweite App auszuführen, die dazu eingerichtet ist, auf einem zweiten Betriebssystem eines zweiten Geräts ausgeführt zu werden, wobei das zweite Gerät ein Fernseher ist, wobei das erste und das zweite Gerät beide durch Peer-to-Peer-Kommunikation miteinander verbunden sind, und wobei die zweite App eine verwandte Begleitanwendung ist, die durch die erste App ausführbar ist, wobei das Verfahren Folgendes umfasst:
beim Ausführen der ersten App (202) durch das erste Gerät:
Verwenden eines Netzwerkprotokolls, das für die Peer-to-Peer-Kommunikation geeignet ist, um ein kompatibles zweites Gerät im Netzwerk zu erkennen,
Kommunizieren mit dem zweiten Gerät, um Daten bezüglich des Entdeckungsprotokolls auszutauschen, Abfragen des zweiten Geräts (208), und
Bestimmen (210) als Reaktion darauf, dass das erste Gerät Informationen von dem zweiten Gerät über die Peer-to-Peer-Kommunikation empfängt, ob die zweite App bereits auf dem zweiten Gerät installiert ist; und
als Reaktion auf das Bestimmen, dass die zweite App bereits auf dem zweiten Gerät installiert ist, Veranlassen durch das erste Gerät, dass die zweite App auf dem zweiten Gerät ausgeführt wird (218), indem eine Ausführungsnachricht an das zweite Gerät gesendet wird, oder dass eine Ausführungsabfragenachricht auf dem ersten Gerät angezeigt wird (214), um eine Benutzereingabe bezüglich des Ausführens der zweiten App auf dem zweiten Gerät zu empfangen, es sei denn, die zweite App bereits auf dem zweiten Gerät ausgeführt wird,
wobei die erste App und die zweite App dafür ausgelegt sind, in Kommunikation miteinander zu arbeiten, und
wobei die erste App und die zweite App zusammen ausgeführt werden, um eine konvergente Mehrbildschirm-Benutzererfahrung mit den Apps zu erzeugen.

2. Verfahren nach Anspruch 1, ferner umfassend:
Bereitstellen eines Mechanismus zur Kommunikation zwischen der ersten App auf dem ersten Gerät und der zweiten App auf dem zweiten Gerät über HTTPS.

3. Verfahren nach Anspruch 1 oder Anspruch 2, ferner umfassend, falls die zweite App nicht auf dem zweiten Gerät installiert ist:
Herunterladen und Installieren (224) der zweiten App durch die erste App von einem entfernten Server über das lokale Netzwerk.

4. Verfahren nach Anspruch 3, ferner umfassend:
Bestimmen (219) durch die erste App, ob eine "Nicht installieren"-Auswahl in Bezug auf die zweite App für das zweite Gerät eingestellt wurde; und wenn ja,
Deaktivieren des Aufforderns des Benutzers des ersten Geräts, die Zustimmung des Benutzers zur Installation der zweiten App einzuholen.

5. Verfahren nach Anspruch 4, ferner umfassend das Veranlassen des Anzeigens einer Benachrichtigung (110b) auf dem zweiten Gerät, dass die zweite App ausgeführt wird oder dass das Herunterladen im Gange ist.

6. Verfahren nach Anspruch 1 bis 5, wobei das zweite Gerät weiterhin die Programmierung anzeigt, während die zweite App heruntergeladen, installiert oder ausgeführt wird.

## Revendications

1. Procédé d'utilisation d'un premier dispositif sur lequel se trouve une première application agencée pour s'exécuter sur un premier système d'exploitation du premier dispositif, pour exécuter une seconde application agencée pour s'exécuter sur un second système d'exploitation d'un second dispositif, dans lequel le second dispositif est un téléviseur, dans lequel les premier et second dispositifs sont tous deux interconnectés via une communication d'égal à égal, et dans lequel la seconde application est une application complémentaire connexe qui est exécutable par la première application, le procédé comprenant :
lors de l'exécution de la première application (202) par le premier dispositif :
l'utilisation d'un protocole de mise en réseau adapté à la communication d'égal à égal pour découvrir un second dispositif compatible sur le réseau,
la communication avec le second dispositif pour échanger des données relatives au protocole de découverte, l'interrogation du second dispositif (208), et
le fait de déterminer (210), en réponse à la réception d'informations par le premier dispositif du second dispositif via la communication d'égal à égal, si la seconde application est déjà installée sur le second dispositif ; et
par le premier dispositif en réponse à la détermination que la seconde application est déjà installée sur le second dispositif, le fait d'amener la seconde application à s'exécuter (218) sur le second dispositif en envoyant un message d'exécution au second dispositif, ou à afficher (214) un message de requête d'exécution sur le premier dispositif pour recevoir une entrée d'utilisateur concernant l'exécution ou non de la seconde application sur le second dispositif, à moins que la seconde application ne soit déjà en cours d'exécution sur le second dispositif,
dans lequel la première application et la seconde application sont agencées pour fonctionner en communication l'une avec l'autre, et
dans lequel la première application et la seconde application s'exécutent ensemble pour produire une expérience utilisateur multi-écrans convergente avec les applications.

2. Procédé selon la revendication 1, comprenant en outre :
la fourniture d'un mécanisme de communication entre la première application sur le premier dispositif et la seconde application sur le second dispositif via HTTPS.

3. Procédé selon la revendication 1 ou la revendication 2, comprenant en outre, si la seconde application n'est pas installée sur le second dispositif :
le téléchargement et l'installation (224) par la première application de la seconde application sur le second dispositif à partir d'un serveur distant via le réseau local.

4. Procédé selon la revendication 3, comprenant en outre :
le fait de déterminer (219) par la première application si une sélection « ne pas installer » a été définie en relation avec la seconde application pour le second dispositif ; et si oui,
la désactivation de l'invite de l'utilisateur du premier dispositif à obtenir le consentement de l'utilisateur pour installer la seconde application.

5. Procédé selon la revendication 4, comprenant en outre l'affichage d'une notification (110b) sur le second dispositif que la seconde application s'exécutera ou que le téléchargement est en cours.

6. Procédé selon les revendications 1 à 5, dans lequel le second dispositif continue d'afficher la programmation pendant le téléchargement, l'installation ou l'exécution de la seconde application.
